# EUROPEAN PATENT SPECIFICATION

(11) **EP 0 540 905 B1**
(45) Date of publication and mention of the grant of the patent: **29.12.1997**
(21) Application number: 92117432.2
(22) Date of filing: 13.10.1992
(51) Int. Cl.: B65G 47/51

(54) **Drum-type accumulator for plastic bottles or the like**
Trommelartige Puffervorrichtung für Kunststoffflaschen oder dergleichen
Dispositif d'accumulation du type à tambour pour bouteilles en plastique ou similaires

(30) Priority: 16.10.1991 IT BG910036
(43) Date of publication of application: 12.05.1993
(73) Proprietor: PROGRAM S.r.l., 24100 Bergamo (IT)
(72) Inventor: Duse, Diego, I-24100 Bergamo (IT)
(74) Representative: Lecce, Giovanni

(56) References cited:
- EP-A- 0 427 683
- EP-A- 0 485 344
- EP-A- 0 486 360
- DE-A- 3 102 203
- US-A- 4 635 784

## Description

The present invention relates to a drum-type recovery storage device for production and filling plants for plastic bottles and equivalent consisting substantially of a powered drum type structure made up of a plurality of strips of running rail aligned mutually and peripherally and directed horizontally along the drum.

Each strip is alignable, based on stepped rotation of the drum, with the input and output rails of any transport system for plastic bottles or equivalent arriving from the forming machine and directed to the filling and capping machines.

The drum constitutes a storage device in which the bottles coming from the forming source accumulate in case of stopping of the filling equipment placed in the line downstream and from which they are sent to filling during possible stops of the forming equipment.

It is known that the present bottling plants such as those for mineral water, drinks in general and liquid substances preserved in plastic bottles or equivalent are directly coupled to bottle forming machines placed upstream and receive the product therefrom by continuous mechanical conveyors.

The pairing of the bottle forming machines and the bottle filling machines is designed allowing for the individual production capacities adequately balanced.

It has been observed however that one or the other of the production units can stop because of some malfunction and in particular this can happen more frequently in the bottling section.

Hence the need to provide so-called intermediate storage facilities in which the bottles however produced in the first forming section can accumulate while waiting for restoration of the following bottling section.

At present said storage facilities are nothing but long translation rails. It is clear that such storage facilities, although extremely simple and economical, are not advantageous because they occupy too much space, require large and costly surroundings and are not rational.

The purpose of the present invention is to eliminate said shortcomings.

A drum type storage assembly having the features of the preamble of claim 1 is known from DE-A-31 02 203.

The drum-type storage assembly of the present invention is characterized by the fact that the translation rail consists of a first translation rail section, coming from the production plant, and a second translation rail section directed to the filling plant; the drum-type recovery storage is placed between the first and the second translation rail sections with the running rail strip in its lower position in alignment with the confluent ends of the first and the second translation rail sections to ensure the continuity of passage among the first rail section, the rotating rail strip and the second rail section; and in that each running rail strip consist of a channel open at the bottom and provided with side fins (8) to engage the projecting ring (9) of each plastic bottle (2) and a further side fin projecting outwardly at only one side and obliquely to any plane passing through the axis of rotation towards the shoulder of the bottle.

The drum of the storage assembly of the present invention comprises a plurality of rail strips aligned mutually and parallel in accordance with a circular radial configuration; each rail strip is alignable, longitudinally and sequentially with stepped travel, with the translation rail for plastic bottles or equivalent which connects a source of production of said bottles to a bottling source. The powered drum comprises sensor control means for filling and/or unloading of each rail strip and for stepped rotation of each strip with associated alignment with the main bottle translation rail.

The advantages achieved by the present invention lie essentially in the fact that the drum storage device allows drastic reduction of the distances between the bottle forming plant and filling plant while ensuring a valid intermediate storage and redistribution unit for the bottles as a consequence of possible forced stops and subsequent resumption of one or the other of said plants. Said collection and subsequent redistribution allow continuous operation of the complete installation even with partial forced stops, thus ensuring uninterrupted production.

The present invention is described in detail with reference to an embodiment given by way of non limiting example with reference to the annexed drawings wherein:-
FIG. 1 shows a schematic end view of the drum type storage device,
FIG. 2 shows in particular a cross section view of an example of conveyance of plastic bottles, and

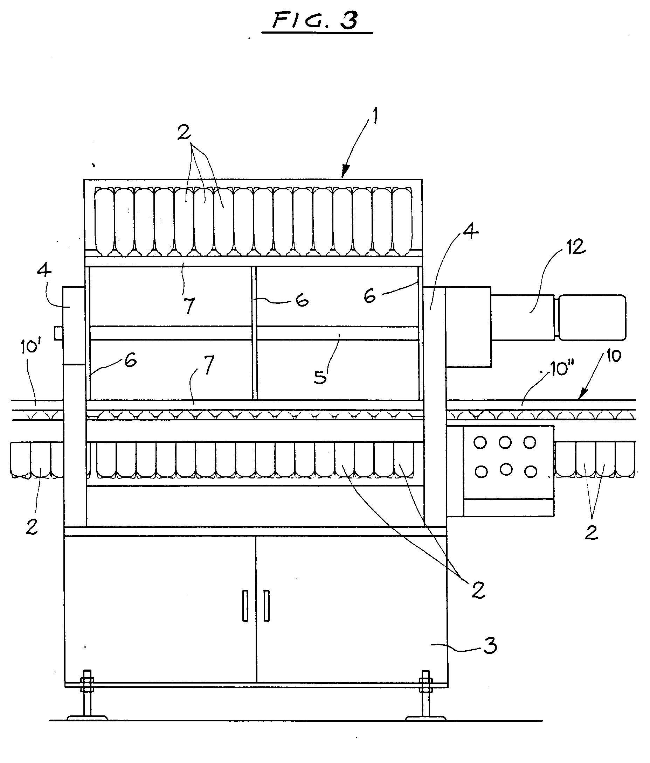

FIG. 3 shows a schematic side view of said drum-type storage device.

The figures illustrate a drum-type recovery storage device (1) for production and filling equipment for plastic bottles and equivalent (2) substantially consisting of a base structure (3) with two side supports (4) between which extends a horizontal axle (5) supporting circular or radial means (6) to whose peripheral ends are constrained strips of running rail (7).

The strips (7) consist of channel open at the bottom and having side fins (8) on which rest the projecting rings (9) present on the necks of the plastic bottles or equivalent (2).

The configuration of the strips (7) is therefore identical to that of the translation rails (10) which are traditionally used for overhead conveyance of bottles from the forming equipment to the filling and closing equipment.

The drum-type storage device (1) is positioned in such a manner as to interrupt the translation rail (10) by aligning therewith the rail strip (7') assembled radially in the lower part of said storage device (1).

Positioning of the drum-type storage device (1) in relation to the translation rail (10) is in interposition thereto, detaching its continuity and aligning thereto the rail strip (7') placed radially in the lower part.

In this manner continuity of passage between the translation rail section (10') placed upstream of the drum-type storage device (1) and coming from the bottle forming plant and the rail length (10'') placed downstream of said drum storage device and directed to the filling and closing plant is ensured by the presence in alignment of at least one strip of running rail (7) of said drum storage device.

Under conditions of regular operation of the entire installation the formed bottles (2) are pushed toward the filling plant along the translation rail (10'), the aligned running rail strip (7') and the following translation rail (10'').

Movement of the bottles takes place in the traditional manner by sequential pushing optionally aided by side blasts of sterile or non sterile air.

Whenever, due to a breakdown, the filling plant downstream from the drum-type storage device (1) is temporarily stopped, its supply of bottles (2) is blocked while the forming plant upstream continues to produce. In this case the bottles accumulate along the entire rail (10') (7') (10'') until they occupy all of the available space.

The full condition is detected by a sensor (11) which acts on the motor (12) of the drum-type storage device (1) to cause stepped rotation of the drum until a second rail strip (7) is aligned with the rail sections (10') and (10'').

The bottles coming from the forming plant, finding newly empty space in the rail strip (7), can advance and leave the upstream rail length (10') empty. Continuing in this direction, the drum-type storage device (1) progressively fills up while waiting for return to duty of the filling and closing plant downstream.

Upon return to duty of the downstream plant the flow of bottles resumes regularly, passing from the translation rail length (10') to the translation rail length (10'') of the translation rail over the strip of rail (7) of the drum-type storage device (1) which at that moment is aligned with it. If the upstream plant stops, the lack of bottles supplied at the outlet of the rail strip (7) aligned with the length (10'') of the downstream rail is detected and the drum is commanded to rotate in a stepped manner to bring into alignment with said length (10'') another strip of rail (7) loaded with bottles (2).

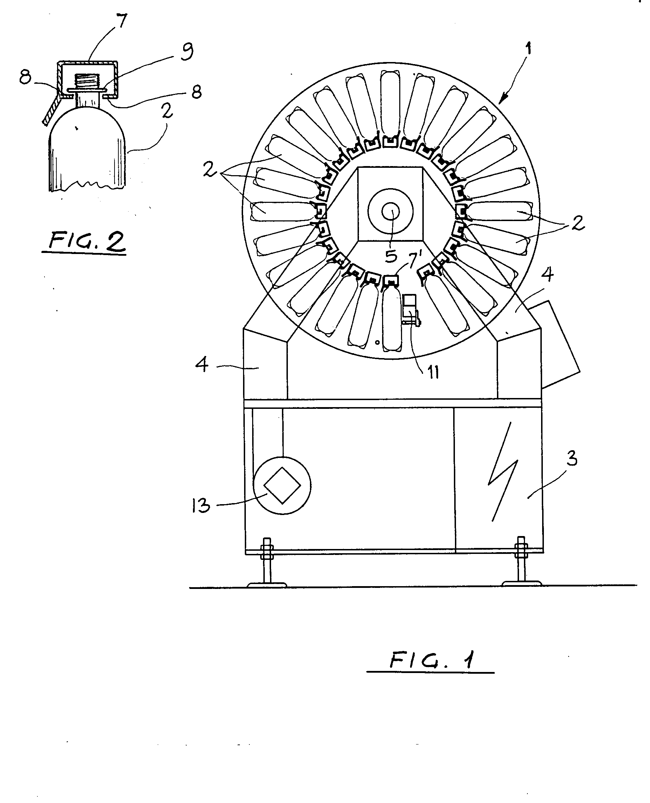

The stepped rotation of the strip of running rail (7), of the drum-type storage device (1) is performed in one direction, e.g. clockwise in accordance with FIG. 1, during the storage phases of the bottles (2) and in the opposite direction during outlet thereof in order to simplify operation and avoid any interference between bottles (2) and sensor (11).

The possibility of a configuration allowing continuous rotation in one direction is not excluded, especially under conditions of total filling of the drum storage device. The entire installation, as described, can be optionally equipped with a pump (13) and a sterilised air circulation system and means of air advancement on the strip of running rail (7).

## Claims

1. A storage assembly for production and filling plants for plastic bottles and the like, said storage assembly comprising a translation rail (10) and a drum-type recovery storage (1) comprising a drum-type structure made of a plurality of running rail strips (7) having a cross section the same of the translation rail (10), said drum-type recovery storage (1) having stepped rotary motion which sequentially aligns each running rail strip (7) to the translation rail (10), characterized in that the translation rail (10) consists of a first translation rail section (10'), coming from the production plant, and a second translation rail section (10'') directed to the filling plant; the drum-type recovery storage (1) is placed between the first and the second translation rail sections (10',10'') with the running rail strip (7') in its lower position in alignment with the confluent ends of the first and the second translation rail section (10',10'') to ensure the continuity of passage among the first rail sections (10'), the rotating rail strip (7') and the second rail section (10''); and in that each running rail strip (7) consist of a channel open at the bottom and provided with side fins (8) to engage the projecting ring (9) of each plastic bottle (2) and a further side fin projecting outwardly at only one side and obliquely to any plane passing through the axis of rotation towards the shoulder of the bottle (2).

2. The storage assembly according to claim 1, wherein the drum-type recovery storage (1) consists of a base structure (3), two side supports (4), a horizontal axle (5) extending between the two side supports (4), circular or radial means (6) supported by the horizontal axle (5) and a plurality of said strips (7) of running rail constrained to the peripheral ends of the circular or radial means (6).

3. The storage assembly according to claim 1 or 2, wherein it is provided with a sensor (11) actuating a motor (12) when the aligned first and second rail sections (10',10'') and the rail strip (7') is full, to cause stepped rotation of the drum-type structure until a second rail strip (7) is aligned with the first and second rail sections (10',10'').

4. The storage assemble according to anyone of the preceding claims, wherein the drum-type structure rotates stepwise in one direction during the storage phase of the bottles (2) and in the opposite direction during the outlet phase of the bottles (2).

5. The storage assembly according to anyone of the preceding claims, wherein the bottles (2) are pushed from the production plant to the filling plant along the first rail section (10'), the aligned running rail strip (7') and the second rail section (10''), and a pump (13) and an air circulation system aid the advancement of the bottles (2) along the running rail strip (7').

## Patentansprüche

1. Lageranordnung für Herstellungs- und Füllanlagen von Kunststoffflaschen und dergleichen, wobei die Lageranordnung umfaßt,
eine Förderschiene (10) und eine trommelartige Aufnahmeeinrichtung (1) mit einem trommelartigen Aufbau aus einer Anzahl von Laufschienenabschnitten (7) mit einem Querschnitt gleich dem der Transportschiene (10), wobei die trommelartige Aufnahmeeinrichtung (1) eine schrittweise Drehbewegung ausführen kann, mittels der nacheinander jeder Laufschienenabschnitt (7) mit der Förderschiene (10) ausgerichtet wird,
**dadurch gekennzeichnet,**
daß die Förderschiene (10) aus einem ersten, von der Produktionsanlage kommenden Förderschienenabschnitt (10') und einem zweiten zur Füllanlage führenden Förderschienenabschnitt (10'') besteht,
die trommelförmige Aufnahmeeinrichtung (1) zwischen dem ersten und dem zweiten Förderschienenabschnitt (10',10'') angeordnet ist, wobei der in der untersten Position sich befindende Laufschienenabschnitt (7') mit den angrenzenden Enden des ersten und zweiten Förderschienenabschnitts (10',10'') ausgerichtet ist, um die Kontinuität des Durchlaufs zwischen dem ersten Schienenabschnitt (10'), dem Laufschienenabschnitt (7'), der eine Drehbewegung ausführen kann, und dem zweiten Schienenabschnitt (10'') zu gewährleisten, und
daß jeder Laufschienenabschnitt (7) aus einem nach unten offenen Kanal besteht und mit seitlichen Abschnitten (8) versehen ist, um mit dem vorstehenden Ring (9) jeder Kunststoffflasche (2) in Eingriff zu treten, und ein weiterer Seitenabschnitt vorgesehen ist, der nur auf einer Seite nach außen und schräg zu einer Ebene vorsteht, die durch die Rotationsachse in Richtung auf die Schulter der Flasche (2) verläuft.

2. Lageranordnung nach Anspruch 1, wobei die trommelartige Aufnahmeeinrichtung (1) aus einem Basisaufbau (3), zwei Seitenträgern (4), einer horizontalen Achse (5), die sich zwischen den beiden Seitenträgern (4) erstreckt, einer kreisförmigen oder radialen Einrichtung (6), die durch die horizontale Achse (5) getragen wird, und einer Anzahl dieser Abschnitte (7) der Laufschiene besteht, die sich zu den Umfangsenden der kreisförmigen und radialen Einrichtung (6) erstrecken.

3. Lageranordnung nach Anspruch 1 oder 2, wobei ein Sensor (11) zum Betätigen eines Motors (12) vorgesehen ist, wenn die ersten und zweiten Schienenabschnitte (10',10'') und der Laufschienenabschnitt (7') voll ausgerichtet sind, um eine schrittweise Drehung des trommelförmigen Aufbaus einzuleiten, bis ein zweiter Laufschienenabschnitt (7) mit dem ersten und zweiten Schienenabschnitt (10',10'') ausgerichtet ist.

4. Lageranordnung nach einem der vorhergehenden Ansprüche, wobei der trommelförmige Aufbau schrittweise in einer Richtung während der Aufnahmephase der Flaschen (2) und in der Gegenrichtung während der Abgabephase der Flaschen (2) umläuft.

5. Lageranordnung nach einem der vorhergehenden Ansprüche, wobei die Flaschen (2) von der Produktionsanlage zu der Füllanlage längs des ersten Schienenabschnitts (10'), längs dem ausgerichteten Schienenabschnitt (7') und dem zweiten Schienenabschnitt (10'') vorgeschoben werden, wobei eine Pumpe (13) und ein Luftzirkulationssystem die Vorwärtsbewegung der Flaschen (2) längs des Laufschienenstreifens (7') unterstützen.

## Revendications

1. Ensemble de stockage pour usines de production et de remplissage de bouteilles en plastique et analogues, ledit ensemble de stockage comprenant un rail de translation (10) et un dispositif de stockage de récupération (1) en forme de tambour comprenant une structure de type tambour réalisée en une pluralité de bandes (7) de glissement dont la section transversale est identique à celle du rail de translation (10), ce dispositif de stockage de récupération (1) en forme de tambour effectuant un mouvement pas-à-pas de rotation au cours duquel chaque bande de glissement (7) est séquentiellement alignée avec le rail de translation (10),
caractérisé en ce que le rail de translation (10) consiste en une première section (10') provenant de l'usine de production, et en une deuxième section (10'') dirigée vers l'usine de remplissage, le dispositif de stockage de récupération (1) en forme de tambour étant placé entre la première et la deuxième section (10', 10'') du rail de translation, la bande de glissement (7') étant dans sa position inférieure alignée avec les extrémités confluentes des premières et deuxièmes sections (10', 10'') du rail de translation pour assurer la continuité du passage entre la première section du rail (10'), la bande de glissement tournante (7'), et la deuxième section du rail (10''), et en ce que chaque bande de glissement (7) consiste en un canal ouvert à sa base et comportant des ailes latérales (8) coopérant avec la bague en saillie (9) de chaque bouteille en plastique (2), et une autre aile latérale qui fait saillie vers l'extérieur sur un côté seulement, obliquement à tout plan qui passe par l'axe de rotation, vers l'épaule de la bouteille (2).

2. Ensemble de stockage selon la revendication 1, dans lequel le dispositif de stockage de récupération (1) consiste en une structure de base (3), deux supports latéraux (4), un essieu horizontal (5) qui s'étend entre les deux supports latéraux (4), des moyens circulaires ou radiaux (6) supportés par l'essieu horizontal (5), et une pluralité de bandes (7) de glissement serrées sur les extrémités périphériques des moyens circulaires ou radiaux (6).

3. Ensemble de stockage selon la revendication 1 ou 2, comportant un détecteur (11) qui actionne un moteur (12) lorsque les première et deuxième sections du rail (10', 10'') et la bande de glissement (7') sont remplies, pour provoquer une rotation pas-à-pas de la structure de type tambour jusqu'à ce qu'une deuxième bande de glissement (7) soit alignée avec les première et deuxième sections du rail (10', 10'').

4. Ensemble de stockage selon l'une quelconque des revendications précédentes, dans lequel la structure de type tambour tourne pas-à-pas dans une direction au cours de la phase de stockage des bouteilles (2), et dans la direction opposée au cours de la phase de sortie des bouteilles (2).

5. Ensemble de stockage selon l'une quelconque des revendications précédentes, dans lequel les bouteilles (2) sont poussées de l'usine de production vers l'usine de remplissage, le long de la première section du rail (10'), la bande de glissement alignée (7') et la deuxième section du rail (10''), et dans lequel une pompe (13) et un système de circulation d'air aident à l'avancement des bouteilles (2) le long de la bande de glissement (7').
